# EUROPEAN PATENT SPECIFICATION

(11) **EP 2 014 688 B1**
(45) Date of publication and mention of the grant of the patent: **30.05.2012**
(21) Application number: 08159903.7
(22) Date of filing: 08.07.2008
(51) Int. Cl.: C08F 220/44, C08L 9/02, C09J 109/02, G09F 3/02, G09F 3/10, B41M 5/44, B41M 5/50, B32B 27/30, B44C 1/10

(54) **Thermosensitive adhesive material**
Wärmeempfindliches Haftmaterial
Matériau adhésif thermosensible

(30) Priority: 09.07.2007 JP 2007180258
(43) Date of publication of application: 14.01.2009
(73) Proprietor: Ricoh Company, Ltd., Tokyo 143-8555 (JP)
(72) Inventor: Shimbo, Hitoshi, Tokyo 143-8555 (JP); Yamaguchi, Takehito, Tokyo 143-8555 (JP); Kuga, Yutaka, Tokyo 143-8555 (JP); Morita, Mitsunobu, Tokyo 143-8555 (JP); Sasaki, Takayuki, Tokyo 143-8555 (JP)
(74) Representative: Barz, Peter

(56) References cited:
- EP-A- 0 893 247
- GB-A- 2 061 981
- JP-A- 1 121 385
- JP-A- 10 279 891
- JP-A- 11 246 837
- JP-A- 2000 103 969
- JP-A- 2000 256 631
- JP-A- 2003 082 034
- JP-A- 2006 037 257

## Description

### BACKGROUND OF THE INVENTION

### Field of the Invention

The present invention relates to a thermosensitive adhesive material having high adhesion to a target, including a thermosensitive adhesive layer which does not have adhesiveness at normal temperature but exhibits adhesiveness by being heated and can sustain the adhesiveness after the exhibition of the adhesiveness. Further, the present invention relates to a thermosensitive adhesive material which performs excellent adhesion in a wide temperature range to a target with little smoothness.

### Description of the Related Art

Adhesive label sheets have been increasingly used for price display labels, product display (bar code) labels, product quality display labels, measurement display labels, advertising labels (stickers) and the like. Meanwhile, as methods for recording onto labels, a variety of methods have been developed, including ink-jet recording method, thermosensitive recording method and pressure-sensitive recording method.

Typical examples of such adhesive label sheets include an adhesive label sheet in which an adhesive layer and a sheet of release paper are laid over a surface of the label on the side opposite an information recording surface. Adhesive label sheets like this are widely used because at the time of affixing they can be easily and conveniently affixed to targets by simply removing release paper and then applying pressure. Conventional adhesive label sheets are used with release paper removed; it should be noted that the removed release paper is hard to reuse through recycling and discarded in most cases.

Accordingly, in recent years, note has been taken of thermosensitive adhesive label sheets as thermosensitive adhesive materials including thermosensitive adhesive layers which, at normal temperature, do not exhibit adhesiveness and therefore do not require release paper (Japanese Utility Model Application Laid-Open (JP-U) No. 06-25869). For instance, thermosensitive adhesive layers in such thermosensitive adhesive label sheets contain thermoplastic resins and hot-melt materials and further contain tackifiers in accordance with the necessity ("Adhesive Handbook", 12th ED., pp 131-135, 1980, published by Kobunshi Kankokai).

The thermosensitive adhesive layers in the thermosensitive adhesive label sheets are disadvantageous in that after the exhibition of their adhesiveness, their adhesion decreases with time, and also their adhesion to targets with little smoothness such as corrugated fiberboard is weak. Moreover, the adhesion of the thermosensitive adhesive layers depends largely upon temperature, so that even when they can show favorable adhesiveness at normal temperature, their adhesiveness noticeably degrades at other temperatures such as 0°C, and they often detach from targets. Therefore, as things stand at present, it is impossible to realize a thermosensitive adhesive label sheet which has adequate adhesion if used in an outdoor environment, etc.

Hitherto, for instance, attempts have been made to improve adhesive properties by using, as hot-melt materials, ester-based materials such as dicyclohexyl phthalate with the intention of enhancing adhesion (Japanese Patent Application Laid-Open (JP-A) No. 61-9479, JP-A No. 07-278521 and so forth). However, although there is a tendency to improve adhesive properties to targets by using such hot-melt materials, it has been impossible to maintain stable adhesion to targets with rough surfaces, such as corrugated fiberboard.

Additionally, thermosensitive adhesive materials containing phosphoric compounds as materials having superior adhesive properties to targets, and sheets using the thermosensitive adhesive materials have been proposed (JP-A No. 2000-103969, JP-A No. 2000-191922, JP-A No. 2000-212527, JP-A No. 2004-117941, JP-A No. 2001-64401, JP-A No. 2001-262117, JP-A No. 2002-88678, JP-A No. 2002-338935 and JP-A No. 2006-257320). Among these, JP-A No. 2000-103969 proposes use of a phosphorus compound having a melting point of 85°C to 100°C as a hot-melt compound (solid plasticizer), in which the use of a low-melting material gives an advantage to exhibition of adhesion by heating. However, in this case as well, when adhesiveness is exhibited, such a condition as heating at 140°C for 30sec is required; therefore, exhibition of adhesiveness by means of energy from a thermal print head would be difficult.

Meanwhile, apart from hot-melt materials, attempts have been made to alter thermoplastic resins, which are other major components. For instance, JP-A No. 2001-200227 proposes exhibiting adhesiveness at the time of heating by means of a mixture composed of a high-Tg resin having a high acid value, a low-Tg resin and a tackifier. However, as opposed to the system in which a solid plasticizer is used, since the viscosity of a thermosensitive adhesive layer hardly decreases after heating, and also the resins are not sufficiently mixed by short-time heating with a thermal head; thus, adhesiveness is almost not exhibited.

Additionally, JP-A No. 8-333565 and the like introduce some cases in which adhesiveness is improved by reducing emulsion particle diameters. However, although favorable adhesiveness is obtained to smooth surfaces, for example, of plastic containers, glass bottles and stainless plates, adequate adhesion cannot be obtained to targets with rough surfaces, wavy surfaces, etc., such as surfaces of corrugated fiberboard and frosted surfaces; also, thermal responsiveness degrades because of the necessity of heating that lasts a fairly long time. Hence, as to any of the cases, it is impossible to obtain a thermosensitive adhesive material at which the present invention is aimed.

JP 2000 256631 A relates to a substrate with an adhesive layer comprising an acrylic resin composed of (A) 1-10 wt.% structural units derived from a (meth)acrylate monomer having an epoxy group, (B) 10-50 wt.% structural units derived from acrylonitrile, and (C) 40-89 wt.% structural units derived from another copolymerizable monomer and having a glass transition temperature of-50 to 0°C. As an example of compound c) 2-ethylhexyl(meth)acrylate is mentioned.

JP 11 246837 A describes an additive for an adhesive comprising (A) a copolymer essentially composed of monomers selected from (a1) a styrenic monomer, (a2) an alkyl (meth) acrylate with a 4-24C alkyl group, and/or (a3) a (meth)acrylonitrile, wherein the copolymer is preferably composed of 30-90 wt.% component (a1), 10-70 wt.% component (a2) and/or (a3), and (a4) 0-10 wt.% other monomer.

JP 2003 082034 A concerns an acrylic resin having a glass transition temperature of -30 to 10°C obtained by polymerization of a monomer mixture comprising (A) an epoxy group-bearing (meth)acrylate monomer, (B) acrylonitrile and (C) imido(meth)acrylate.

JP 10 279891 A relates to an adhesive sheet comprising an anchor coating obtained from an anchor coating agent which is an organic polymer having ultraviolet-absorbing groups which can be a e g methacrylic, acrylic, polyester or polystyrene resin

*IP* 01 121385 A describes an adhesive film obtained by laying a separating layer of hot melt type between a epoxy resin layer and a layer of a curing agent for the resin wherein the separating layer is of hot melt type comprising a thermoplastic resin

### BRIEF SUMMARY OF THE INVENTION

The present invention can solve the problems in related art, and an object of the present invention is to provide a thermosensitive adhesive material which is superior in blocking resistance when not active and which has adequate adhesion in a wide temperature range to a target with little smoothness such as corrugated fiberboard.

The problems can be solved by <1> to <7> below, which are elements of the present invention
<1> A thermosensitive adhesive material including a support, and a thermosensitive adhesive layer provided on one surface of the support, the thermosensitive adhesive layer containing as essential components a thermoplastic resin and a hot-melt material that melts when heated, wherein the thermoplastic resin contains as a main component a (meth)acrylic copolymer in which acrylonitrile as a monomer component occupies 5% by mass to 20% by mass of all monomer components, and wherein the glass transition temperature of the copolymer is in the range of-70°C to -30°C, wherein the (meth)acrylic copolymer contains as a main component [A] 2-ethylhexyl acrylate and a component [B] which can polymerize with [A] to form a copolymer, wherein the mass ratio of [A] to [B] is in the range of 98/2 to 70/30.
<2> The thermosensitive adhesive material according to <1>, further including an intermediate layer which contains fine hollow particles and a thermoplastic resin as main components, between the thermosensitive adhesive layer and the support.
<3> The thermosensitive adhesive material according to <2>, further including an adhesive under layer between the support and the intermediate layer.
<4> The thermosensitive adhesive material according to any one of <1> to <3>, further including one of a recording layer and a combination of a recording layer and a protective layer, laid over a surface of the support, which is opposite to a surface on which the thermosensitive adhesive layer is provided.
<5> The thermosensitive adhesive material according to <4>, wherein the recording layer is any one of a thermosensitive recording layer, an ink receiving layer for hot-melt transfer recording, an electrophotographic toner image receiving layer, a recording layer for silver halide photography, and an ink-jet ink image receiving layer.
<6> The thermosensitive adhesive material according to any one of <4> and <5>, wherein the support is one of synthetic paper and plastic film.
<7> The thermosensitive adhesive material according to any one of <4> to <6>, being in a form of any one of a label, a sheet, a label sheet and a roll.

### DETAILED DESCRIPTION OF THE INVENTION

The following explains embodiments of the present invention in detail.

### <Thermosensitive Adhesive Layer>

A thermosensitive adhesive layer in the present invention contains a thermoplastic resin and a hot-melt material as essential components and further contains other components such as a tackifier and a non-melting material in accordance with the necessity. Normally, the thermoplastic resin and the hot-melt material occupy 50% by mass or more of all materials. When they occupy less than 50% by mass, it is unfavorable because the thermosensitive adhesive layer cannot perform adequate adhesion to a target and may therefore detach therefrom depending upon the use environment.

### - Thermoplastic Resin -

The thermoplastic resin contains as a main component a (meth)acrylic copolymer in which acrylonitrile, a monomer component, occupies 5% by mass to 20% by mass of all monomer components. Here, the term "(meth)acrylic" denotes acrylic and/or methacrylic. When the acrylonitrile component occupies less than 5% by mass, the effects of the thermoplastic resin are nullified. When it occupies more than 20% by mass, a bonding force inside the resin strengthens, which makes it difficult for melt mixing to occur between the thermoplastic resin and the after-mentioned hot-melt material at the time of heating, and thus adhesiveness is not exhibited.

The acrylonitrile component is a component for raising the glass transition temperature (Tg) of the copolymer. Although the glass transition temperature (Tg) can also be raised by increasing a methyl methacrylate component or a styrene component in amount, these components do not make it possible to remove temperature dependence. Meanwhile, when the proportion of the acrylonitrile component is in the above-mentioned range but the Tg is lower than -70°C, the problem of blocking cannot be solved. When the Tg is higher than -30°C or an acrylic component is not adequately contained, although the thermosensitive adhesive layer may be able to adhere to smooth surfaces, it cannot sufficiently stick to a target with little smoothness such as corrugated fiberboard.

Examples of monomer components other than acrylonitrile include [A] ethylene-based unsaturated carboxylic acids such as acrylic acid, methacrylic acid, maleic acid and itaconic acid, (meth)acrylic acid esters such as methyl (meth)acrylate, ethyl (meth)acrylate, n-butyl (meth)acrylate, isobutyl (meth)acrylate and 2-ethylhexyl (meth)acrylate, amide-based vinyl compounds such as acrylamide and N-methylolacrylamide, and hydroxyl group-containing vinyl compounds such as 2-hydroxyethyl acrylate and 3-hydroxypropyl methacrylate; and [B] conjugate double bond-containing compounds such as butadiene, isoprene and butylene, aromatic vinyl monomers such as styrene, α-methylstyrene and vinyltoluene, vinyl esters such as vinyl acetate, vinyl cyanide compounds such as (meth)acrylonitrile, and vinyl chloride.

The (meth)acrylic copolymer in the present invention contains as a main component a component [A] and a component [B] which can polymerize with [A] to form a copolymer, selected from among the rest of the monomer components. The mass ratio of [A] to [B] is in the range of 98/2 to 70/30. The use of 2-ethylhexyl acrylate as the component [A] enables the thermosensitive adhesive layer to conform favorably to a target and adhere firmly thereto.

The Tg of the (meth)acrylic copolymer in the present invention is adjusted to the range of -70°C to -30°C. When the Tg is lower than -70°C, for instance, adhesion to the opposite surface of the thermosensitive adhesive layer arises when stored in the form of a roll, which is problematic in terms of practical use. When a material having a Tg of higher than -30°C is used, the thermosensitive adhesive layer has little flexibility after thermal activation; therefore, although the thermosensitive adhesive layer may be able to adhere to smooth surfaces such as glass, it cannot be suitably stuck on a target surface which is not smooth, because it comes into contact with the target surface only at some points.

The thermoplastic resin may be formed by mixing the (meth)acrylic copolymer with an emulsion such as a natural rubber latex produced by subjecting a vinyl monomer to graft copolymerization, an acrylic acid ester copolymer, a methacrylic acid ester copolymer, an acrylic acid ester-methacrylic acid ester copolymer, an acrylic acid ester-styrene copolymer, an acrylic acid ester-methacrylic acid ester-styrene copolymer or an ethylene-vinyl acetate copolymer, and/or a water-soluble resin such as polyvinyl alcohol. It should, however, be noted that the (meth)acrylic copolymer needs to occupy 70% by mass or more of the thermoplastic resin as a main component.

The amount of the thermoplastic resin contained in the thermosensitive adhesive layer is preferably 10% by mass to 60% by mass, more preferably 15% by mass to 50% by mass. When the amount is less than 10% by mass, it is undesirable because there is a reduction in adhesion. When it is greater than 60% by mass, there is such a storage-related trouble that adhesion is exhibited at temperatures in a normal storage environment (e.g. blocking).

### - Hot-melt Material -

Since the hot-melt material is solid at normal temperature, it does not give plasticity to resin. However, the hot-melt material melts by heating and exhibits adhesiveness as it makes the resin swollen or soft, then it slowly crystallizes; therefore, the adhesiveness can be sustained for a long time even after a heat source has been removed.

Examples of the hot-melt material in the present invention include benzotriazole compounds represented by the following Structural Formula (1), hydroxybenzoic acid ester compounds represented by the following Structural Formula (2), compounds represented by the following Structural Formulae (3) to (5) and phosphine compounds represented by the following Structural Formulae (6) and (7), which may be used in combination. 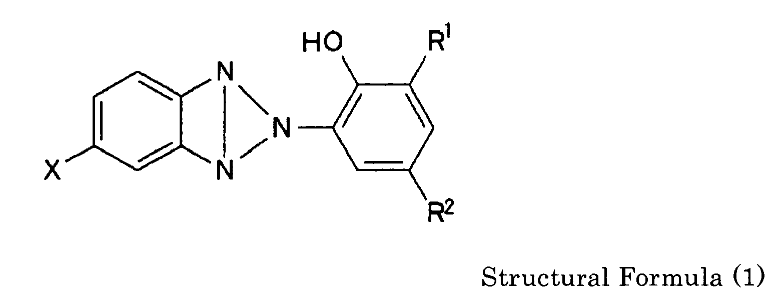 [In the formula, R¹ and R² may be identical or different from each other, and they each denote any one of a hydrogen atom, an alkyl group and an α,α-dimethylbenzyl group; X denotes a hydrogen atom or a halogen atom.]

The alkyl group is preferably an alkyl group having 1 to 8 carbon atoms, for example methyl group, ethyl group, n-propyl group, n-butyl group, n-pentyl group, n-hexyl group or n-heptyl group. Each of these groups may be substituted by a substituent.

Examples of the substituent include hydroxyl group, halogen atoms, nitro group, carboxyl group and cyano group. Examples thereof also include alkyl groups, aryl groups and heterocyclic groups, each of which may have a specific substituent (may be substituted by a halogen atom or nitro group, for example).

The halogen atoms denote fluorine, chlorine, bromine and iodine.

Examples of the benzotriazole compounds represented by Structural Formula (1) include, but are not limited to,
2-(2'-hydroxy-5'-methylphenyl)benzotriazole,
2-(2'-hydroxy-5'-t-octylphenyl)benzotriazole,
2-(2'-hydroxy-3'-t-butyl-5'-methylphenyl)-5-chlorobenzotriazole,
2-(2'-hydroxy-3',5'-di-t-amylphenyl)benzotriazole,
2-(2'-hydroxy-3',5'-t-butylphenyl)-5-chlorobenzotriazole,
2-[2'-hydroxy-3',5'-di(1,1-dimethylbenzyl)phenyl]benzotriazole,
2-(2'-hydroxy-3',5'-di-t-butylphenyl)benzotriazole and 2-(2'-hydroxy-3'-sec-butyl-5'-t-butylphenyl)benzotriazole. Also, each of these compounds may be used alone or in combination with two or more. 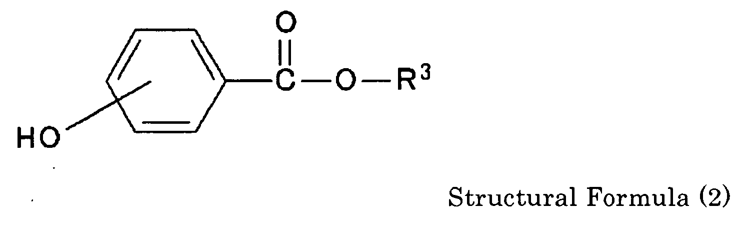 [In the formula, R³ denotes any one of an alkyl group, an alkenyl group, an aralkyl group and an aryl group, each of which may be substituted by a substituent.]

Examples of the alkyl group include those having 1 to 18 carbon atoms, which are exemplified by alkyl groups such as methyl group, ethyl group, n-propyl group, n-butyl group, n-hexyl group, n-octyl group, n-dodecyl group, n-octadecyl group, isopropyl group, isobutyl group, t-butyl group, isoamyl group, 2-ethylbutyl group, 2-ethylhexyl group and t-octyl group, and cycloalkyl groups such as cyclohexyl group, 4-methylcyclohexyl group, 4-ethylcyclohexyl group, 4-t-butylcyclohexyl group, 4-(2-ethylhexyl)cyclohexyl group, bornyl group, isobornyl group and adamantyl group. Each of these may be substituted by a substituent.

The alkenyl group is preferably an alkenyl group having 2 to 8 carbon atoms, for example vinyl group, allyl group, 1-propenyl group, methacryl group, crotyl group, 1-butenyl group, 3-butenyl group, 2-hexenyl group, 5-hexenyl group or 2-octenyl group. Each of these groups may be substituted by a substituent.

The aralkyl group is not particularly limited and may be suitably selected in accordance with the intended use. Examples thereof include benzyl group, phenylethyl group and phenylpropyl group, each of which may be substituted by a substituent.

Examples of the aryl group include phenyl group, naphthyl group, anthranil group, fluorenyl group, phenalenyl group, phenanthranyl group, triphenylenyl group and pyrenyl group, each of which may be substituted by a substituent.

Examples of the substituent for the alkyl group, the alkenyl group, the aralkyl group or the aryl group include hydroxyl group, halogen atoms, nitro group, carboxyl group and cyano group. Examples thereof also include alkyl groups, aryl groups and heterocyclic groups, each of which may have a specific substituent (may be substituted by a halogen atom or nitro group, for example).

Examples of the hydroxybenzoic acid ester compounds represented by Structural Formula (2) include, but are not limited to, methyl m-hydroxybenzoate, ethyl m-hydroxybenzoate, phenyl
m-hydroxybenzoate, methyl p-hydroxybenzoate, ethyl
p-hydroxybenzoate, n-propyl p-hydroxybenzoate, n-butyl
p-hydroxybenzoate, stearyl p-hydroxybenzoate, cyclohexyl
p-hydroxybenzoate, benzyl p-hydroxybenzoate, 4-chlorobenzyl
p-hydroxybenzoate, 4-methylbenzyl p-hydroxybenzoate and phenyl p-hydroxybenzoate. Also, each of these compounds may be used alone or in combination with two or more. 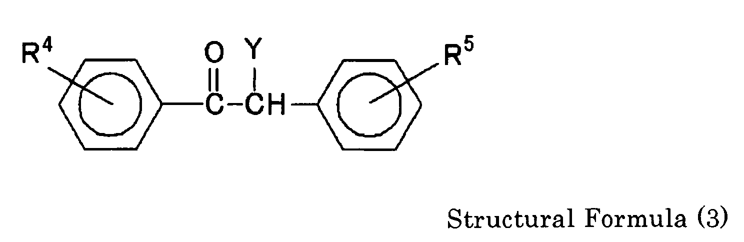 [In the formula, R⁴ and R⁵ may be identical or different from each other, and they each denote an alkyl group or an alkoxy group; Y denotes a hydrogen atom or a hydroxyl group.] 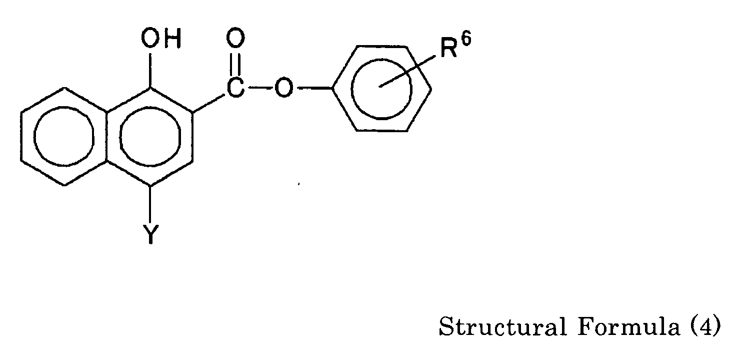 [In the formula, R⁶ denotes any one of a hydrogen atom, a halogen atom, an alkyl group and an alkoxy group; Y denotes a hydrogen atom or a hydroxyl group.] 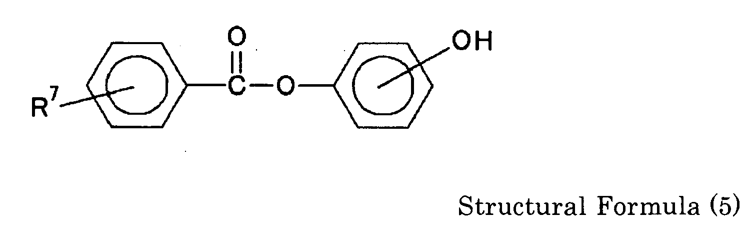 [In the formula, R⁷ denotes any one of a hydrogen atom, a halogen atom, an alkyl group and an alkoxy group.]

Examples of the alkyl groups in Structural Formulae (3) to (5) include alkyl groups similar to those suitable for the alkyl group in Structural Formula (1).

Examples of the alkoxy groups in Structural Formulae (3) to (5) include methoxy group, ethoxy group, propyloxy group, isopropyloxy group, butoxy group, i-butoxy group, t-butoxy group, hexyloxy group, cyclohexyloxy group, octyloxy group, 2-ethylhexyloxy group, decyloxy group, dodecyloxy group and octadecyloxy group.

Examples of the compounds represented by Structural Formula (3) include, but are not limited to, p-anisoin, 4,4'-dimethylbenzoin and piperoin. Examples of the compounds represented by Structural Formula (4) include, but are not limited to, 1-hydroxy-2-phenyl naphthoate, 1-hydroxy-2-naphthoic acid-p-chlorophenyl,
1-hydroxy-2-naphthoic acid-o-chlorophenyl, 1-hydroxy-2-naphthoic acid-p-methylphenyl, 1-hydroxy-2-naphthoic acid-o-methylphenyl, 1,4-dihydroxy-2-phenyl naphthoate, 1,4-dihydroxy-2-naphthoic
acid-p-chlorophenyl and 1,4-dihydroxy-2-naphthoic
acid-o-chlorophenyl. Examples of the compounds represented by Structural Formula (5) include, but are not limited to,
3-hydroxyphenyl benzoate, 4-hydroxyphenyl benzoate,
2-hydroxyphenyl benzoate, o-methyl 3-hydroxyphenyl benzoate and 3-hydroxyphenyl p-chlorobenzoate. Each of these compounds may be used alone or in combination with two or more. 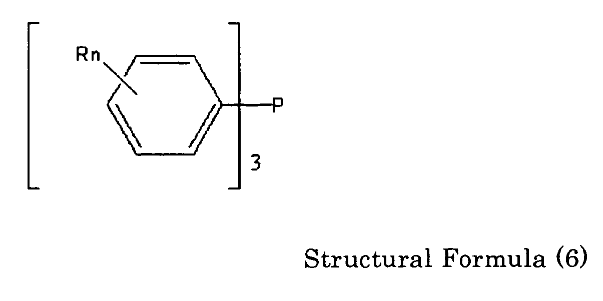 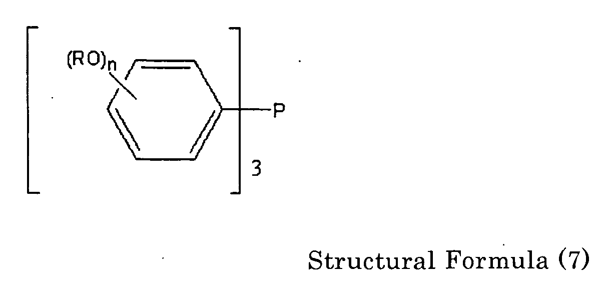 In Structural Formulae (6) and (7), R denotes an alkyl group having 1 to 4 carbon atoms, which may be branched. Examples thereof include methyl group, ethyl group, propyl group, butyl group and t-butyl group. "n" denotes an integer of 1 to 5.

Examples of the compounds represented by Structural Formula (6) include, but are not limited to, triphenylphosphine, tri-m-tolylphosphine, tri-p-tolylphosphine, tri-o-tolylphosphine, tri-2,4-xylenephosphine, tri-2,5-xylenephosphine,
tri-2,6-xylenephosphine, tri-3,4-xylenephosphine and
tri-3,5-xylenephosphine. Examples of the compounds represented by Structural Formula (7) include, but are not limited to,
tris(o-methoxyphenyl)phosphine, tris(m-methoxyphenyl)phosphine, tris(p-methoxyphenyl)phosphine, tris(p-ethoxyphenyl)phosphine, tris(p-n-propyloxyphenyl)phosphine, tris(m-t-butoxyphenyl)phosphine, tris(m-n-butoxyphenyl)phosphine, tris(p-n-butoxyphenyl)phosphine and tris(p-t-butoxyphenyl)phosphine. Each of these compounds may be used alone or in combination with two or more.

Besides the compounds represented by Structural Formulae (1) to (7), compounds which are solid at normal temperature and miscible with the thermoplastic resin when they melt by heating can be used for the hot-melt material of the present invention. Examples of such compounds are shown below. However, it should be noted that these examples do not limit the scope of the present invention.

These examples include
2,2-ethylidene-bis-(4,6-di-t-butylphenol),
bis(3,5-di-t-butyl-4-hydroxybenzyl)sulfide,
2-(3,5-di-t-butyl-4-hydroxybenzyl)-2-n-butylmalonate-bis(1,2,2,6,6-pentamethyl-4-piperidyl),
1,6-hexanediol-bis[3-(3,5-di-t-butyl-4-hydroxyphenyl)propionate], 3,9-bis[2-[3-(3-t-butyl-4-hydroxy-5-methylphenyl)propionyloxy]-1,1-dimethylethyl]-2,4,6-(1H,3H,5H)trione,
2,4-di-t-pentylphenyl-3,5-di-t-butyl-4-hydroxybenzoate,
2,2'-methylenebis[6-(1-methylcyclohexyl)-p-cresol],
4,4'-methylenebis(2,6-di-t-butylphenol), 1,4-dihydroxy-2-naphthoic acid phenyl ester, 2,2'-butylidenebis(4-methyl-6-t-butylphenol), 2,2'4,4'-tetrahydroxybenzophenone,
4-benzyloxy-2-hydroxybenzophenone,
2-(4,6-diphenyl-1,3,5-triazine-2-yl)-5- [(hexyl)oxy]phenol,
6- [3-(3-t-butyl-4-hydroxy-5-methylpropoxy)-2, 4, 8,10-tetra-t-butyldibenz[d,f][1,3,2]-dioxaphosphepin, phosphoric acid ester amide, 2-(4'-morpholinodithio)benzothiazole, 1-o-tolylbiguanide,
O,O'-dibenzamidediphenyl disulfide and
tris(2,4-di-t-butylphenyl)phosphite.

Among the compounds represented by Structural Formulae (1) to (7), compounds which are solid at room temperature and melt when heated can be suitably used. The melting point of each of these compounds is preferably 70°C or higher, more preferably 80°C or higher. The upper limit of the melting point is approximately 200°C.

In the case where the melting point is lower than 70°C, when any of the compounds is incorporated in a thermosensitive adhesive, there may be such a storage-related trouble that adhesion is exhibited at temperatures in a normal storage environment (e.g. blocking). Also, there may be such a production-related trouble that adhesion is exhibited when a thermosensitive adhesive coating solution is applied onto a support and dried. In the case where the melting point is higher than 200°C, a large amount of energy is required to exhibit adhesion, and thus there may be a trouble in practical use. Also, when thermosensitive recording paper is used as a support and adhesion is exhibited with a large amount of energy, there is such a trouble that printed images cannot be read because a thermosensitive recording layer develops color.

Also, a hot-melt material derived from any of the compounds represented by Structural Formulae (1) to (7) can be pulverized into particles of 10µm or less, preferably 3µm or less, in volume average particle diameter. Additionally, by further reducing the volume average particle diameter of the particles, for example to 0.5µm or less, the dynamic heat sensitivity of the hot-melt material improves, and the hot-melt material can become compatible with the thermoplastic resin and a tackifier even with low energy to constitute a thermally activated adhesive.

For the hot-melt material, any of the above-mentioned compounds may be used alone and may be combined with any of the compounds represented by Structural Formulae (1) to (7) with an arbitrary proportion, in which case the mixture ratio can be arbitrarily adjusted.

### - Tackifier -

The tackifier is added so as to improve the adhesion of the thermosensitive adhesive layer, and it is not particularly limited and may be suitably selected from known tackifiers in accordance with the intended use. Examples thereof include rosin derivatives (e.g. rosin, polymerized rosin and hydrogenated rosin), terpene resins (e.g. terpene resins, aromatic modified terpene resins, terpene phenol resins and hydrogenated terpene resins), petroleum resins, phenolic resins and xylene resins. Among these, rosin derivatives are particularly preferable.

Any of these tackifiers is compatible with the thermoplastic resin and the hot-melt material and improves the adhesion of the thermosensitive adhesive layer remarkably.

The melting point (or softening point) of the tackifier is preferably 80°C or greater, more preferably in the range of 80°C to 200°C. When the melting point (or softening point) is lower than 80°C, there may be a storage-related trouble at temperatures in a normal storage environment (e.g. degradation of blocking resistance).

The amount of the tackifier contained in the thermosensitive adhesive layer is preferably 1% by mass to 30% by mass, more preferably 1% by mass to 20% by mass. When the amount is less than 1% by mass, there may be a dramatic decrease in adhesion. When it is more than 30% by mass, there may be a storage-related trouble at temperatures in a normal storage environment (e.g. degradation of blocking resistance), or there may be a decrease in initial adhesion in a low-temperature environment.

### - Non-melting Material -

In the present invention, a non-melting material may be additionally used so as to prevent blocking or reduce the frictional force of a surface. Examples of such a non-melting material include commonly used inorganic pigments, organic pigments and composite pigments of organic and inorganic pigments, each having a volume average particle diameter of 0.5µm to 30µm, preferably 1µm to 20µm.

Examples of the inorganic pigments include calcium carbonate, silica, titanium oxide, aluminum hydroxide, clay, fired clay, magnesium silicate, magnesium carbonate, white carbon, zinc oxide, barium sulfate, calcium carbonate, talc, kaolin, swellable mica and non-swellable mica.

Examples of the organic pigments include fine powders of benzoguanamine-formaldehyde condensates,
benzoguanamine-melamine-formaldehyde condensates,
melamine-formaldehyde condensates, methyl polymethacrylate crosslinked products, butyl polymethacrylate crosslinked products, urea-formalin resins, styrene-methacrylic acid copolymers and polystyrene resins.

Also, it is possible to use particles of any of these organic pigments, that have been processed so as to have a porous structure, for example porous particles of methyl polymethacrylate crosslinked products.

Examples of the composite pigments of organic and inorganic pigments include silica-acrylic composite compounds, and particles of silicone-based materials superior in release property, for example silicone rubbers, particles of silicone resins and composite particles of silicone rubbers and silicone resins.

Further, these fillers may be subjected to partial or total surface modification, either chemically with the use of a silane coupling agent, titanate coupling agent, aluminum-based coupling agent, zircoaluminate coupling agent, etc. or physically with the use of a polymer such as a silicone resin.

Among these filler materials, organic pigments superior in release property are preferable, with silicone particles and methyl polymethacrylate crosslinked products being particularly preferable. It is inferred that the spherical structures of these resin particles contribute to enhancement of release property relative to blocking resistance as well as that the materials of these resin particles per se are superior in release property relative to blocking resistance. Additionally, in the case where exhibition of adhesiveness (activation) by a thermal head is taken into consideration, the extent to which the resin particles are damaged when adhesiveness is exhibited by the thermal head is small, and thus the resin particles are superior in head matching capability.

The method for forming the thermosensitive adhesive layer is not particularly limited, and a known coating method, a known printing method or the like can be employed therefor, with a coating method being particularly preferable. The thermosensitive adhesive layer can be suitably formed using a thermosensitive adhesive layer coating solution containing the above-mentioned components.

Examples of the coating method include blade coating, gravure coating, gravure offset coating, bar coating, roll coating, knife coating, air knife coating, comma coating, U comma coating, AKKU coating, smoothing coating, microgravure coating, reverse roll coating, four- or five-roll coating, dip coating, falling curtain coating, slide coating and die coating.

On the occasion of the coating or printing, the thermosensitive adhesive layer coating solution must be dried within such a temperature range that the hot-melt material and an eutectic agent used do not melt. As a means of drying, it is possible to employ a drying method utilizing a heat source based upon an infrared ray, a microwave or a high-frequency wave, besides drying with hot air.

Normally, the amount of the thermosensitive adhesive layer coating solution applied is preferably 2g/m² to 30g/m², more preferably 5g/m² to 20g/m², as a dry application amount. When the application amount is less than 2g/m², there is caused a decrease in adhesion to a target with a rough surface, such as corrugated fiberboard. When it is greater than 30g/m², the amount of energy required for the thermosensitive adhesive layer to exhibit adhesiveness becomes large; also, when an intermediate layer is provided between the thermosensitive adhesive layer and a support, heat-insulating effects yielded by the intermediate layer are reduced, which is unfavorable. Additionally, it goes without saying that there is economic inferiority.

### <Support>

The shape, structure, size and the like of a support are not particularly limited and may be suitably selected in accordance with the intended use of the thermosensitive adhesive material. Examples of the shape include the shape of a flat plate, and the structure may be a single-layer structure or a laminated structure.

The material for the support is not particularly limited and may be suitably selected in accordance with the intended use. The material may be selected from a variety of inorganic materials and organic materials.

Examples of the inorganic materials include glass, quartz, silicon, silicon oxide, aluminum oxide, SiO₂ and metals. Examples of the organic materials include papers such as high-quality paper, art paper, coated paper and synthetic paper; cellulose derivatives such as cellulose triacetate; polyester resins such as polyethylene terephthalate (PET) and polybutylene terephthalate; and polyolefins such as polycarbonates, polystyrene, polymethyl methacrylate, polyamide, polyethylene and polypropylene. Among these, high-quality paper, coated paper, plastic film and synthetic paper are preferable, with plastic film and synthetic paper being particularly preferable.

Examples of the synthetic paper include materials made of synthetic fibers such as polyethylene, polypropylene, polyethylene terephthalate and polyamide; and any of these materials which is affixed to a part, one surface or both surfaces of paper. Examples of commercially available synthetic paper include FPG, FGS, GFG, KPK and the like produced by Oji-Yuka Synthetic Paper Co., Ltd.

When the support is formed of film or synthetic paper, the support does not sufficiently allow a thermosensitive adhesive or the like to permeate into it, in comparison with a support formed of high-quality paper, used paper, etc. made from pulp or the like, and also the support is very poor in anchor property. Further, in recent years, note has been taken of contact activation using a thermal head, which is due to the advantages of safety and high-speed property as a thermal activation method and the current trend of on-demand requirements. Unfortunately, this method has such a side effect that a surface of an active layer is shaved off; particularly in thermal activation, the thermal head itself becomes hot so as to activate a whole surface of a label, and thus detachment of a thermosensitive adhesive layer becomes noticeable. However, in the present invention, even when a film or synthetic paper is used as the support, it is possible to prevent detachment or contraction of the film or the synthetic paper at the time of thermal activation, and an adhesive deposit is not created when a label is replaced.

It is desirable that the support be subjected to surface modification by means of corona discharge, oxidation reaction (using chromic acid, for example), etching, facilitation of adhesion, antistatic treatment, etc. for the purpose of improving the adhesiveness of the coating layer. Also, it is desirable to color the support white by addition of, for example, a white pigment such as titanium oxide.

The thickness of the support is not particularly limited and may be suitably selected in accordance with the intended use, with the range of 50µm to 2,000µm being desirable and the range of 100µm to 1,000µm being more desirable.

### <Intermediate Layer>

In the present invention, it is desirable to provide an intermediate layer between the support and the thermosensitive adhesive layer. Since provision of the intermediate layer makes it possible to smooth the support surface and adjust the wetness of the surface, the thickness of the thermosensitive adhesive layer becomes uniform as a result and so it becomes possible to reduce variation in the extent of thermal activation. The intermediate layer contains a thermoplastic resin and a pigment (filler) and further contains other components in accordance with the necessity. For the pigment, it is particularly desirable to use fine hollow particles (a hollow filler) in view of thermal responsiveness in exhibiting adhesiveness. Inclusion of the fine hollow particles enables the intermediate layer to be a material superior in thermal responsiveness.

Plastic spherical hollow particles of 2.0µm to 5.0µm in volume average particle diameter and 70% or more in hollowness, which have heat-insulating effects, particularly those which are 10.0µm or less in maximum particle diameter, are suitable for the fine hollow particles in view of the effort of low-energy thermal activation (high-sensitivity thermal activation). Those which are low in hollowness are inferior in terms of high-sensitivity thermal activation effects because thermal energy from a thermal head is discharged to the outside through the support owing to their insufficient heat-insulating effects.

The fine hollow particles in the present invention denote particles which have shells formed of a thermoplastic resin and contain air and other gases inside thereof and which are already in a foamed state. Additionally, the term "hollowness" herein used denotes the ratio of the volume of hollow portions (internal void portions) to the volume of whole hollow particles.

Also, in the case where the fine hollow particles have a volume average particle diameter of greater than 5.0µm, when the thermosensitive adhesive layer is provided on the intermediate layer containing these components, there are parts created in which the thermosensitive adhesive layer is not formed because of the large particles, and thus adhesion is liable to decrease on the occasion of thermal activation. In the case where the fine hollow particles have a volume average particle diameter of less than 2.0µm, it is difficult to secure a hollowness of 70% or more, and thus high-sensitivity thermal activation effects may not be obtained. In order to secure adhesion in a thermal activation method using a thermal head, it is desirable for the hollowness of hollow particles used in the intermediate layer to be 70% or more.

For the material forming the plastic spherical hollow particles which satisfy the above-mentioned conditions, an acrylonitrile-vinylidene chloride-methyl methacrylate copolymer or an acrylonitrile-methacrylonitrile-isobornyl methacrylate copolymer is suitable.

The thermoplastic resin used in the intermediate layer can be selected from a variety of known compounds, for example polyvinyl chloride, polyvinyl acetate, vinyl chloride-vinyl acetate copolymers, ethyl cellulose, polystyrene, styrene copolymers, phenoxy resins, polyester, aromatic polyester, polyurethane, polycarbonates, polyacrylic acid esters, polymethacrylic acid esters, acrylic acid copolymers, maleic acid copolymers, polyvinyl alcohol, modified polyvinyl alcohol, hydroxyethyl cellulose, carboxymethyl cellulose and starches. Among these compounds, those which are -70°C to -5°C in Tg are preferable because use of a resin similar to the thermoplastic resin used in the thermosensitive adhesive layer makes it possible to improve the compatibility between the resins of both layers. For instance, at least one of the following is preferable: a natural rubber latex produced by subjecting a vinyl monomer to graft copolymerization, an acrylic acid ester copolymer, a methacrylic acid ester copolymer, an acrylic acid ester-methacrylic acid ester copolymer, an acrylic acid ester-styrene copolymer, an acrylic acid ester-methacrylic acid ester-styrene copolymer and an ethylene-vinyl acetate copolymer.

In the case of high-Tg resins which are higher than -5°C in Tg, the features of the intermediate layer cannot be obtained at all, and thus there is a decrease in adhesion to a target with a rough surface (such as corrugated fiberboard), polyolefin wrap and the like.

As to the ratio between the fine hollow particles and the thermoplastic resin used in the intermediate layer, it is desirable that the plastic spherical hollow particles be 0.1 parts by mass to 1.0 part by mass in relation to 1 part by mass of the thermoplastic resin. When the plastic spherical hollow particles are contained by less than 0.1 parts by mass, the intermediate layer is inferior in high-sensitivity thermal activation, and further, its blocking resistance degrades. When the plastic spherical hollow particles are contained by more than 1.0 part by mass, there is a decrease in adhesion to a target with a rough surface (such as corrugated fiberboard), polyolefin wrap and the like, and thus adhesion may be derived only from the thermosensitive adhesive layer provided thereover.

The amount of the intermediate layer applied is normally 0.2g/m² to 10g/m², preferably 1g/m² to 5g/m², as a dry application amount. When the amount is less than 0.2g/m², sufficient heat-insulating effects cannot be obtained at the time of thermal activation. When it is greater than 10g/m², adhesion and heat-insulating effects do not improve any further, which is economically unfavorable.

The intermediate layer can be formed in a similar manner to the thermosensitive adhesive layer.

### <Adhesive Under Layer (Adhesive Resin Layer)>

In the present invention, it is further desirable to provide an adhesive under layer (adhesive resin layer) between the support and the intermediate layer. As a resin used for the adhesive under layer, a thermoplastic resin which has a Tg of-70°C to -10°C and which is also used for the thermosensitive adhesive layer is preferable, for example at least one selected from a natural rubber latex produced by subjecting a vinyl monomer to graft copolymerization, an acrylic acid ester copolymer, a methacrylic acid ester copolymer, an acrylic acid ester-methacrylic acid ester copolymer, an acrylic acid ester-styrene copolymer, an acrylic acid ester-methacrylic acid ester-styrene copolymer and an ethylene-vinyl acetate copolymer.

In the case of high-Tg resins which are higher than -10°C in Tg, the features of the adhesive under layer cannot be obtained at all; therefore, there is a decrease in adhesion to a target with a rough surface (such as corrugated fiberboard), polyolefin wrap and the like, and thus adhesion may be derived only from the thermosensitive adhesive layer provided thereover. Meanwhile, low-Tg resins which are lower than -70°C in Tg are not particularly problematic; however, they are not favorable because costs rise. Additionally, almost all resins are -70°C or higher in Tg.

The amount of the adhesive under layer applied is normally 2g/m² to 35g/m², preferably 4g/m² to 25g/m², as a dry application amount. When the amount is less than 2g/m², adequate adhesion cannot be obtained when bonding is carried out after thermal activation. When it is greater than 35g/m², adhesion and heat-insulating effects do not improve any further, which is unfavorable.

The adhesive under layer can be formed in a similar manner to the thermosensitive adhesive layer.

Next, the thermosensitive adhesive material of the present invention preferably includes a recording layer or a combination of a recording layer and a protective layer, laid over a surface of the support, which is opposite to a surface on which the thermosensitive adhesive layer is provided. Further, the thermosensitive adhesive material may incorporate other layers in accordance with the necessity.

The recording layer is not particularly limited and may be suitably selected in accordance with the intended use. For instance, the recording layer is preferably any one of a thermosensitive recording layer, an ink receiving layer for hot-melt transfer recording, an electrophotographic toner image receiving layer, a recording layer for silver halide photography, and an ink-jet ink image receiving layer. Among these, a thermosensitive adhesive material for thermosensitive recording, provided with a thermosensitive recording layer containing a leuco dye and a color developer, and a thermosensitive adhesive material for hot-melt transfer recording, provided with an ink receiving layer for hot-melt transfer recording, are extremely useful because they firmly adhere to targets, especially a target with a rough surface (such as corrugated fiberboard) and polyolefin wrap, and are excellent in terms of low-energy thermal activation and blocking resistance.

### <Thermosensitive Adhesive Material for Thermosensitive Recording>

The thermosensitive recording layer in the thermosensitive adhesive material for thermosensitive recording contains a leuco dye as a color-developing agent, a color developer and a binder resin and further contains other components in accordance with the necessity.

The leuco dye is not particularly limited and may be suitably selected from known dyes in accordance with the intended use. Examples thereof include triphenylmethane dyes, fluoran dyes, phenothiazine dyes, auramine dyes, spiropyran dyes and indolylphthalide dyes.

Specific examples of the leuco dye include
3,3-bis(p-dimethylaminophenyl)phthalide,
3,3-bis(p-dimethylaminophenyl)-6-dimethylaminophthalide (otherwise called "crystal violet lactone"),
3,3-bis(p-dimethylaminophenyl)-6-diethylaminophthalide,
3,3-bis(p-dimethylaminophenyl)-6-chlorphthalide,
3,3-bis(p-dibutylaminophenyl)phthalide,
3-cyclohexylamino-6-chlorfluoran,
3-dimethylamino-5,7-dimethylfluoran, 3-diethylamino-7-chlorfluoran, 3-diethylamino-7-methylfluoran, 3-diethylamino-7,8-benzfluoran, 3-diethylamino-6-methyl-7-chlorfluoran,
3-(N-p-tolyl-N-ethylamino)-6-methyl-7-anilinofluoran,
3-pyrrolidino-6-methyl-7-anilinofluoran,
2-{N-(3'-trifluormethylphenyl)amino}-6-diethylaminofluoran, 2-{3,6-bis(diethylamino)-9-(o-chloranilino)xanthyl benzoic acid lactam},
3-diethylamino-6-methyl-7-(m-trichlormethylanilino)fluoran,
3-diethylamino-7-(o-chloranilino)fluoran,
3-dibutylamino-7-(o-chloranilino)fluoran,
3-N-methyl-N-amylamino-6-methyl-7-anilinofluoran,
3-N-methyl-N-cyclohexylamino-6-methyl- 7-anilinofluoran, 3-diethylamino-6-methyl-7-anilinofluoran,
3-(N,N-diethylamino)-5-methyl-7-(N,N-dibenzylamino)fluoran,
benzoyl leuco methylene blue,
6'-chloro-8'-methoxy-benzoindolino-pyrylospirane, 6'-bromo-3'-methoxy-benzoindolino-pyrylospirane,
3-(2'-hydroxy-4'-dimethylaminophenyl)-3-(2'-methoxy-5'-chlorphenyl) phthalide,
3-(2'-hydroxy-4'-dimethylaminophenyl)-3-(2'-methoxy-5'-nitrophenyl) phthalide,
3-(2'-hydroxy-4'-diethylaminophenyl)-3-(2'-methoxy-5'-methylphenyl) phthalide,
3-diethylamino-6-methyl-7-(2',4'-dimethylanilino)fluoran, 3-(2'-methoxy-4'-dimethylaminophenyl)-3-(2'-hydroxy-4'-chlor-5'-methylphenyl)phthalide,
3-morpholino-7-(N-propyl-trifluoromethylanilino)fluoran,
3-pyrrolidino-7-trifluoromethylanilinofluoran, 3-diethylamino-5-chloro-7-(N-benzyl-trifluoromethylanilino)fluoran,
3-pyrrolidino-7-(di-p-chlorphenyl)methylaminofluoran,
3-diethylamino-5-chlor-7-(α-phenylethylamino)fluoran,
3-(N-ethyl-p-toluidino)-7-(α-phenylethylamino)fluoran,
3-diethylamino-7-(o-methoxycarbonylphenylamino)fluoran,
3-diethylamino-5-methyl-7-(α-phenylethylamino)fluoran,
3-diethylamino-7-piperidinofluoran,
2-chloro-3-(N-methyltoluidino)-7-(p-n-butylanilino)fluoran,
3-(N-benzyl-N-cyclohexylamino)-5,6-benzo-7-α-naphthylamino-4'-o-bromofluoran,
3-diethylamino-6-methyl-7-mesitydino-4',5'-benzofluoran,
3-diethylamino-6-methyl-7-(2',4'-dimethylanilino)fluoran,
3-(p-dimethylaminophenyl)-3-{1,1-bis(p-dimethylaminophenyl) ethylene-2-yl}phthalide,
3-(p-dimethylaminophenyl)-3-{1,1-bis(p-dimethylaminophenyl) ethylene-2-yl}-6-dimethylaminophthalide,
3-(p-dimethylaminophenyl)-3-(1-p-dimethylaminophenyl-1-phenylethylene-2-yl)phthalide, 3-(p-dimethylaminophenyl-3-(1-p-dimethylaminophenyl-1-p-chlorophenylethylene-2-yl)-6-dimethylaminophthalide),
3-(4'-dimethylamino-2'-methoxy)-3-(1"-p-dimethylaminophenyl-1"-p-chlorophenyl-1",3"-butadiene-4"-yl)benzophthalide,
3-(4'-dimethylamino-2'-benzyloxy)-3-(1"-p-dimethylaminophenyl-1"-phenyl-1",3"-butadiene-4"-yl)benzophthalide,
3-dimethylamino-6-dimethylamino-fluorene-9-spiro-3'-(6'-dimethylamino)phthalide,
3,3-bis{2-(p-dimethylaminopheny1)-2-(p-methoxypheny1)ethenyl}-4,5, 6,7-tetrachlorophthalide,
3-bis{1,1-bis(4-pyrrolidinopheny1)ethylene-2-yl}-5,6-dichloro-4,7-dibromophthalide,
bis(p-dimethylaminostyryl)-1-naphthalenesulfonylmethane, 3-(N-methyl-N-propylamino)-6-methyl-7-anilidefluoran,
3-diethylamino-6-methyl-7-anilinofluoran,
3,6-bis(dimethylamino)fluoranspiro(9,3')- 6'-dimethylaminophthalide, 3-diethylamino-6-chlor-7-anilinofluoran,
3-N-ethyl-N-(2-ethoxypropyl)amino-6-methyl-7-anilinofluoran,
3-N-ethyl-N-tetrahydrofurfurylamino-6-methyl-7-anilinofluoran,
3-diethylamino-6-methyl-7-mesitydino-4', 5'-benzofluoran, 3-N-methyl-N-isobutyl-6-methyl-7-anilinofluoran and 3-N-ethyl-N-isoamyl-6-methyl-7-anilinofluoran. Each of these may be used alone or in combination with two or more.

The color developer is not particularly limited and may be suitably selected from known electron-accepting compounds in accordance with the intended use. Examples thereof include phenolic compounds, thiophenolic compounds, thiourea derivatives, organic acids and metal salts thereof.

Specific examples of the color developer include
4,4'-isopropylidenebisphenol, 3,4'-isopropylidenebisphenol, 4,4'-isopropylidenebis(o-methylphenol), 4,4'-s-butylidenebisphenol, 4,4'-isopropylidenebis(o-t-butylphenol), 4,4'-cyclohexylidenediphenol,
4,4'-isopropylidenebis(2-chlorophenol),
2,2'-methylenebis(4-methyl-6-t-butylphenol),
2,2'-methylenebis(4-ethyl-6-t-butylphenol),
4,4'-butylidenebis(6-t-butyl-2-methyl)phenol,
1,1,3-tris(2-methyl-4-hydroxy-5-t-butylphenyl)butane,
1,1,3-tris(2-methyl-4-hydroxy-5-cyclohexylphenyl)butane,
4,4'-thiobis(6-t-butyl-2-methyl)phenol, 4,4'-diphenolsulfone,
4,2'-diphenolsulfone, 4-isopropoxy-4'-hydroxydiphenylsulfone, 4-benzyloxy-4'-hydroxydiphenylsulfone, 4,4'-diphenolsulfoxide, isopropyl p-hydroxybenzoate, benzyl p-hydroxybenzoate, benzyl protocatechuate, stearyl gallate, lauryl gallate, octyl gallate, 1,7-bis(4-hydroxyphenylthio)-3,5-dioxaheptane,
1,5-bis(4-hydroxyphenylthio)-3-oxaheptane,
1,3-bis(4-hydroxyphenylthio)-propane,
2,2'-methylenebis(4-ethyl-6-t-butylphenol),
1,3-bis(4-hydroxyphenylthio)-2-hydroxypropane,
N,N'-diphenylthiourea, N,N'-di(m-chlorophenyl)thiourea, salicylanilide, 5-chloro-salicylanilide, salicyl-o-chloroanilide, 2-hydroxy-3-naphthoic acid, antipyrine complexes of zinc thiocyanate, 2-acetyloxy-3-zinc salts of naphthoic acid, 2-hydroxy-1-naphthoic acid, 1-hydroxy-2-naphthoic acid, metal salts (e.g. zinc salts, aluminum salts and calcium salts) of hydroxynaphthoic acid,
bis-(4-hydroxyphenyl)acetic acid methyl ester,
bis-(4-hydroxyphenyl)acetic acid benzyl ester,
4-{β-(p-methoxyphenoxy)ethoxy}salicylate,
1,3-bis(4-hydroxycumyl)benzene, 1,4-bis(4-hydroxycumyl)benzene,
2,4'-diphenolsulfone, 3,3'-diallyl-4,4'-diphenolsulfone, antipyrine complexes of α,α-bis(4-hydroxyphenyl)-α-methyltoluene zinc thiocyanate, tetrabromobisphenol A, tetrabromobisphenol S, 4,4'-thiobis(2-methylphenol), 3,4-hydroxy-4'-methyl-diphenylsulfone and 4,4'-thiobis(2-chlorophenol). Each of these may be used alone or in combination with two or more.

The amount of the color developer added into the thermosensitive recording layer may be suitably selected in accordance with the intended use. As the ratio of the color developer to the leuco dye, the color developer is preferably 1 part by mass to 20 parts by mass, more preferably 2 parts by mass to 10 parts by mass, in relation to 1 part by mass of the leuco dye.

The binder resin is not particularly limited and may be suitably selected from known binder resins in accordance with the intended use. Examples thereof include polyvinyl alcohol; starch and derivatives thereof; cellulose derivatives such as methoxycellulose, hydroxyethylcellulose, carboxymethylcellulose, methylcellulose and ethylcellulose; water-soluble polymers such as sodium polyacrylate, polyvinylpyrrolidone, acrylamide-acrylic acid ester copolymers, acrylamide-acrylic acid ester-methacrylic acid terpolymers,
styrene-maleic anhydride copolymer alkali salts, isobutylene-maleic anhydride copolymer alkali salts, polyacrylamide, sodium alginate, gelatin and casein; emulsions such as polyvinyl acetate, polyurethane, polyacrylic acid, polyacrylic acid esters, polymethacrylic acid esters, polybutyl methacrylate, vinyl chloride-vinyl acetate copolymers and ethylene-vinyl acetate copolymers; and latexes such as styrene-butadiene copolymers and styrene-butadiene-acrylic copolymers. Each of these may be used alone or in combination with two or more.

In the thermosensitive recording layer, a thermally fusible material can be used as a filling material, and the thermally fusible material can be selected from a variety of thermally fusible materials. Examples thereof include fatty acids such as stearic acid and behenic acid; fatty acid amides such as stearic acid amide and palmitic acid amide; fatty acid metal salts such as zinc stearate, aluminum stearate, calcium stearate, zinc palmitate and zinc behenate; and p-benzylbiphenyl, terphenyl, triphenylmethane, benzyl
p-benzyloxybenzoate, β-benzyloxynaphthalene, β-naphthoic acid phenyl ester, 1-hydroxy-2-naphthoic acid phenyl ester,
1-hydroxy-2-naphthoic acid methyl ester, diphenyl carbonate, terephthalic acid dibenzyl ester, terephthalic acid dimethyl ester, 1,4-dimethoxynaphthalene, 1,4-diethoxynaphthalene,
1,4-dibenzyloxynaphthalene, 1,2-bis(phenoxy)ethane,
1,2-bis(3-methylphenoxy)ethane, 1,2-bis(4-methylphenoxy)ethane,
1,4-bis(phenoxy)butane, 1,4-bis(phenoxy)-2-butene,
1,2-bis(4-methoxyphenylthio)ethane,
1,3-bis(2-vinyloxyethoxy)benzene, 1,4-bis(2-vinyloxyethoxy)benzene,
p-(2-vinyloxyethoxy)biphenyl, p-aryloxybiphenyl,
p-propargyloxybiphenyl, dibenzoyloxymethane,
1,3-dibenzoyloxypropane, dibenzyldisulfide, 1,1-diphenylethanol, 1,1-diphenylpropanol, p-(benzyloxy)benzyl alcohol,
1,3-diphenoxy-2-propanol,
N-octadecylcarbamoyl-p-methoxycarbonylbenzene,
N-octadecylcarbamoylbenzene, oxalic acid dibenzyl ester and 1,5-bis(p-methoxyphenyloxy)-3-oxapentane. Each of these may be used alone or in combination with two or more.

Further, in the thermosensitive recording layer, auxiliary additive components such as a surfactant, a lubricant and a filler may be additionally used in accordance with the necessity. Examples of the lubricant include higher aliphatic acids or metal salts thereof, higher aliphatic acid amides, higher aliphatic acid esters, animal waxes, vegetable waxes, mineral waxes and petroleum waxes. The filler can be selected from known materials, which are exemplified by, but not limited to, inorganic pigments such as calcium carbonate, zinc oxide, aluminum oxide, titanium dioxide, silica, aluminum hydroxide, barium sulfate, talc, kaolin, alumina and clay, and known organic pigments. Among these, silica, kaolin and alumina, which are acid pigments (i.e. pigments which exhibit acidity in aqueous solution), are preferable in view of water resistance (resistance to peeling by water), particularly preferably silica in terms of color development density.

The method of forming the thermosensitive recording layer is not particularly limited, and a conventionally known method can be employed therefor. For instance, the thermosensitive recording layer can be formed as follows: the leuco dye and the color developer are separately pulverized and dispersed along with a coupling agent and other components with the use of a disperser such as a ball mill, attritor or sand mill until the dispersion particle diameter becomes 1µm to 3µm; afterward, these ingredients are mixed together, with addition of the filling material, the thermally fusible material (sensitizer) dispersion solution and the like if necessary, according to a certain formulation so as to prepare a thermosensitive recording layer coating solution, and the thermosensitive recording layer coating solution is applied onto the support.

The thickness of the thermosensitive recording layer cannot be unequivocally defined because it varies depending upon the composition of the thermosensitive recording layer, the use of the thermosensitive adhesive material, etc. However, the thickness is preferably 1µm to 50µm, more preferably 3µm to 20µm.

### <Thermosensitive Adhesive Material for Hot-melt Transfer Recording>

The ink receiving layer for hot-melt transfer recording in the thermosensitive adhesive material for hot-melt transfer recording contains a filler, a binder resin and a water-resistant agent and further contains other components in accordance with the necessity.

The filler is not particularly limited and may be suitably selected in accordance with the intended use. Examples thereof include fine powders of calcium carbonate, silica, titanium oxide, aluminum hydroxide, clay, fired clay, magnesium silicate, magnesium carbonate, white carbon, zinc oxide, barium sulfate, surface-treated calcium carbonate, surface-treated silica, urea-formalin resins, styrene-methacrylic acid copolymers and polystyrene.

The binder resin is not particularly limited and may be suitably selected from known water-soluble resins in accordance with the intended use. Examples thereof include polyvinyl alcohol; starch and derivatives thereof; cellulose derivatives such as methoxycellulose, hydroxyethylcellulose, carboxymethylcellulose, methylcellulose and ethylcellulose; and water-soluble polymers such as sodium polyacrylate, polyvinylpyrrolidone, acrylamide-acrylic acid ester copolymers, acrylamide-acrylic acid ester-methacrylic acid terpolymers, styrene-maleic anhydride copolymer alkali salts, isobutylene-maleic anhydride copolymer alkali salts, polyacrylamide, sodium alginate, gelatin and casein.

Each of these may be used alone or in combination with two or more.

The ratio of the filler to the water-soluble resin in the ink receiving layer is related to blocking resistance and is preferably in the range of 1:0.1 to 1:0.2 as a mass ratio (solid content).

The water-resistant agent is not particularly limited and may be suitably selected in accordance with the intended use. Examples thereof include formaldehyde, glyoxal, chromium alum, melamine, melamine-formaldehyde resins, polyamide resins and
polyamide-epichlorhydrin resins.

The ratio of the water-soluble resin to the water-resistant agent is also related to blocking resistance and is preferably in the range of 1:0.3 to 1:0.5 as a mass ratio (solid content).

As just described, the ink receiving layer is formed with a specific ratio of the filler to the water-soluble resin and also with a specific ratio of the water-soluble resin to the water-resistant agent. Further, by treating the surface of the ink receiving layer with a calender or the like so as to become 500sec or greater in smoothness, it is possible to further improve printing quality as well as the effects produced by the filler.

### - Protective Layer -

The protective layer contains a resin component and further contains other components in accordance with the necessity. For the resin in this case, a hydrophobic resin emulsion or a water-soluble resin can be used, with a film containing a water-soluble resin being preferable in view of barrier capability as a protective layer. Also, when a water-soluble resin is used, the effect can be improved by providing it with water resistance with the use of a crosslinking agent.

For the water-soluble resin, polyvinyl alcohol is normally used; however, a combination of the water-soluble resin and the crosslinking agent for water resistance can be suitably selected. For instance, there is a combination of carboxy-modified polyvinyl alcohol and a polyamide-epichlorohydrin resin, and a combination of polyvinyl alcohol having a reactive carbonyl group and a hydrazide compound.

Among these, a protective layer which contains polyvinyl alcohol having a reactive carbonyl group (hereinafter referred to as "PVAα") and a hydrazide compound as a crosslinking agent has extremely high heat resistance and water resistance and is not much subject to the effects caused by application of pressure, temperature or humidity. Therefore the protective layer makes it possible to improve blocking resistance greatly.

The PVAα can be produced in accordance with a known method, for example a method in which a polymer obtained by copolymerizing a vinyl monomer having a reactive carbonyl group and a fatty acid vinyl ester is saponified. Examples of the vinyl monomer having a reactive carbonyl group include groups having ester residues, and acetone group-containing groups, preferably diacetone group-containing vinyl monomers, specifically diacetone acrylamide and metadiacetone acrylamide. Examples of the fatty acid vinyl ester include vinyl formate, vinyl acetate and vinyl propionate, with vinyl acetate being particularly preferable.

The PVAa may be produced by copolymerizing other copolymerizable vinyl monomers. Examples thereof include acrylic acid esters, butadiene, ethylene, propylene, acrylic acid, methacrylic acid, maleic acid, maleic anhydride and itaconic acid.

The amount of the reactive carbonyl group contained in the PVAα is preferably 0.5mol% to 20mol% relative to the whole polymer, more preferably 2mol% to 10mol% in view of water resistance. When the amount is less than 2mol%, water resistance sufficient for practical use cannot be yielded. When it is more than 10mol%, water resistance does not improve any further and the cost becomes higher, which is not economical. The polymerization degree of the PVAα is preferably 300 to 3,000, more preferably 500 to 2,200. The saponification degree of the PVAα is preferably 80% or more.

The hydrazide compound is not particularly limited and may be suitably selected in accordance with the intended use, as long as it has a hydrazide group. Examples thereof include carbohydrazide, oxalic acid dihydrazide, formic acid hydrazide, acetic acid hydrazide, malonic acid dihydrazide, succinic acid dihydrazide, adipic acid dihydrazide, azelaic acid hydrazide, sebacic acid dihydrazide, dodecanedioic acid dihydrazide, maleic acid dihydrazide, fumaric acid hydrazide, itaconic acid dihydrazide, benzoic acid hydrazide, glutaric acid dihydrazide, diglycol acid hydrazide, tartaric acid dihydrazide, malic acid dihydrazide, isophthalic acid hydrazide, terephthalic acid dihydrazide, 2,7-naphthoic acid dihydrazide and polyacrylic acid hydrazide.

Each of these compounds may be used alone or in combination with two or more. However, use of adipic acid dihydrazide is preferable in view of water resistance and safety.

The amount of the hydrazide compound contained is preferably 5 parts by mass to 40 parts by mass, more preferably 15 parts by mass to 25 parts by mass, in relation to 100 parts by mass of the PVAα.

It is desirable that a filler be contained in the protective layer. The filler is preferably a basic filler, and examples thereof include aluminum hydroxide, calcium carbonate, talc and alkaline silicic acids, with aluminum hydroxide and calcium carbonate being preferable in view of matching with a thermal head (attachment of a residue), and aluminum hydroxide being particularly preferable in view of controlling the pH by means of appropriate water solubility.

The method of forming the protective layer is not particularly limited, and a conventionally known method can be employed therefor. For instance, the protective layer can be formed by applying a protective layer coating solution, prepared in accordance with a conventional method, over the recording layer.

The thickness of the protective layer is not particularly limited and may be suitably selected in accordance with the intended use, with the range of 1.0µm to 7.0µm being preferable.

Further, it is also possible to provide an intermediate layer and the like between the support and the thermosensitive recording layer in accordance with the necessity. For instance, the pigment containing the fine hollow particles, the coupling agent, the thermally fusible material and the surfactant, mentioned above, can be used as components to constitute the layer(s).

The thermosensitive adhesive material of the present invention may be cut before or after the thermosensitive adhesive layer is thermally activated (heated). In this case, if a cut is made in the thermosensitive adhesive material beforehand, the thermosensitive adhesive material is advantageous in that it can be applied to a variety of uses such as labels and tags.

The form of the thermosensitive adhesive material of the present invention is not particularly limited, and suitable examples thereof include the form of a label, the form of a sheet, the form of a label sheet and the form of a roll. In particular, it is desirable that the thermosensitive adhesive material be wound around a cylindrical core material and stored in the form of a roll with a long length, in view of convenience, its storage place and handleability.

The target to which the thermosensitive adhesive material of the present invention is affixed is not particularly limited, and the size, form, structure, material and the like thereof may be suitably selected in accordance with the intended use. Suitable examples of the material include resin plates made of polyolefins (polyethylene, polypropylene, etc.), acrylic, polyethylene terephthalate (PET), polystyrene and nylon; metal plates made of SUS and aluminum; paper products such as envelopes and corrugated fiberboard; wraps made of polyolefins, and wraps made of polyvinyl chloride; unwoven cloth made of polyethylene (envelopes, etc.); and glass.

The method for thermally activating the thermosensitive adhesive layer of the thermosensitive adhesive material of the present invention is not particularly limited and may be suitably selected in accordance with the intended use. Examples thereof include an activation method utilizing hot air, an activation method utilizing a thermal roll, and an activation method utilizing a thermal head.

Among these, an activation method utilizing a thermal head is preferable and is advantageous in that recording to the thermosensitive recording layer and thermal activation of the thermosensitive adhesive layer can be simultaneously carried out by heating both surfaces of the thermosensitive adhesive material with the use of an existing thermosensitive recording printer apparatus.

According to the present invention, it is possible to provide a thermosensitive adhesive material which is excellent in blocking resistance when not active and which has adequate adhesion in a wide temperature range to a target with little smoothness such as corrugated fiberboard.

### EXAMPLES

The following explains the present invention in further detail, with reference to Examples; however, it should be noted that the present invention is not confined to these Examples in any way. It should also be noted that the term "part" and the symbol "%" shown below are both based upon mass.

### - Production of Thermoplastic Resin Solution [P Solution] -

Monomer mixtures (A to O) having the compositions shown in Tables 1 and 2 below were prepared.

Subsequently, mixtures having the following compositions were each polymerized at 70°C in 9hr with agitation. The pH of each of the copolymers obtained was adjusted to 7 to 9 using a sodium hydroxide aqueous solution, unreacted monomers and the like were removed by steam distillation, the nonvolatile content of each copolymer was adjusted by addition of water, and copolymer emulsions having a nonvolatile content of 50% were thus obtained.

### - Resins A to N -

| | |
|---|---|
| | |
| • water | 170 parts |
| • emulsifier (ELEMINOL ES-70, produced by Sanyo Chemical Industries, Ltd.) | 2.5 parts |
| • potassium persulfate | 0.5 parts |
| • monomer mixture | 100 parts |
| - Resin O - | |
| • water | 100 parts |
| • emulsifier (sodium dodecylbenzenesulfonate) | 2.5 parts |
| • sodium persulfate | 0.5 parts |
| • α-methylstyrene dimer | 0.5 parts |
| • t-dodecyl mercaptan | 0.4 parts |
| • monomer mixture | 100 parts |

**Table 1**

| Monomer structural ratio (Parts by mass) | A | B | C | D | E |
|---|---|---|---|---|---|
| n-butyl acrylate | | | | 67 | |
| 2-ethylhexyl acrylate | 75 | 75 | 75 | 10 | 92 |
| n-octyl acrylate | | | | | |
| Methyl methacrylate | 17 | 12 | 2 | 10 | |
| 2-hydroxyethyl methacrylate | | | | | |
| Acrylonitrile | 5 | 10 | 20 | 10 | 5 |
| Acrylic acid | 2 | 2 | 2 | 2 | 2 |
| Itaconic acid | | | | | |
| n-methylolacrylamide | | | | | |
| Vinyl acetate | 1 | 1 | 1 | 1 | 1 |
| Styrene | | | | | |
| Butadiene | | | | | |
| Copolymer Tg (°C) | -45 | -45 | -43 | -33 | -67 |

**Table 2**

| Monomer structural ratio (Parts by mass) | F | G | H | I | J | K | L | M | N | O |
|---|---|---|---|---|---|---|---|---|---|---|
| n-butyl acrylate | | | | | | | | | 60 | |
| 2-ethylhexyl acrylate | 75 | 75 | 75 | 75 | | 62 | | 88 | | |
| n-octyl acrylate | | | | | 92 | | | | | |
| Methyl methacrylate | 20 | | 22 | | | 15 | 50 | 8 | 17 | 3 |
| Isobutyl methacrylate | | | | | | | 30 | | 5 | |
| Acrylonitrile | 2 | 22 | | | 5 | 20 | | 2 | 10 | 5 |
| Acrylic acid | 2 | 2 | 2 | 2 | 2 | 2 | 20 | 2 | 5 | |
| Itaconic acid | | | | | | | | | | 3 |
| n-methylolacrylamide | | | | | | | | | 3 | |
| Vinyl acetate | 1 | 1 | 1 | 1 | 1 | 1 | | | | |
| Styrene | | | | 22 | | | | | | 39 |
| Butadiene | | | | | | | | | | 50 |
| Copolymer Tg (°C) | -43 | -47 | -42 | -40 | -72 | -27 | 93 | -58 | 4 | -35 |

### - Production of Hot-melt Material Dispersion Solution [Q Solution] -

A mixture having the following composition was dispersed so as to have an average particle diameter of 1.0µm, using a sand mill, and a hot-melt material dispersion solution [Q solution] was thus obtained.

| | |
|---|---|
| • triphenylphosphine | 15 parts |
| • 2-(3'-t-butyl-5'-methyl-2'-hydroxyphenyl)-5-chlorobenzotriazole | 15 parts |
| • polyvinyl alcohol (L-3266, produced by The Nippon Synthetic Chemical Industry Co., Ltd., average molecular weight: 15,000, saponification degree: 88%) | 5 parts |
| • surfactant (alkyl = allylsulfonate) | 0.15 parts |
| • water | 64.85 parts |

### - Preparation of Thermosensitive Adhesive Layer Coating Solution [R Solution] -

The following composition was sufficiently agitated, and a thermosensitive adhesive layer coating solution [R solution] was thus obtained.

| | |
|---|---|
| • [P solution] (copolymer emulsion) | 10 parts |
| • [Q solution] (hot-melt material dispersion solution) | 66 parts |
| • special rosin ester emulsion (SUPER ESTER E-650, produced by Arakawa Chemical Industries, Ltd., nonvolatile content: 50%) | 6 parts |
| • spherical silicone resin fine particles (TOSPEARL 120, produced by Momentive Performance Materials Inc.) | 3 parts |
| • water | 15 parts |

### <Preparation of Fine Hollow Particles>

In 160g of ion-exchange water, 55g of sodium chloride was dissolved, and 1.0g of adipic acid-diethanolamine condensate and 25g of colloidal silica 20% aqueous solution were added; thereafter, the pH was adjusted to the range of 3.8 to 4.2 with sulfuric acid, and the ingredients were evenly mixed to form an aqueous phase.

An oil phase was formed by mixing, agitating and dissolving 45g of acrylonitrile, 16g of methacrylonitrile, 5g of
N-methylolacrylamide, 23g of isobonyl methacrylate, 0.1g of ethylene glycol dimethacrylate, 0.3g of azobisisobutyronitril, 0.1g of 1,1-azobis(cyclohexane-1-carbonitrile) and 15g of isobutane.

The aqueous phase and the oil phase were mixed together and agitated using a homomixer at 4,000rpm for 1min to obtain a suspension. This suspension was transferred into a separable flask and substituted by nitrogen; thereafter, while being agitated, the suspension was subjected to reaction at 70°C for 6hr then at 90°C for 14hr. After the reaction, the suspension was cooled and filtered, and capsule particles were thus obtained.

Next, hollow particles were formed through foaming by heating. These hollow particles had a hollowness of 89% and a volume average particle diameter (median diameter) of 4.5µm.

### <Production of Intermediate Layer Coating Solution [S Solution]>

An intermediate layer coating solution was prepared by agitating and dispersing the following mixture.

| | |
|---|---|
| • aqueous dispersion solution of the fine hollow particles (nonvolatile content: 30%) | 30 parts |
| • acrylic copolymer emulsion (NEW COAT SFK-1000A, produced by Shin-Nakamura Chemical Co., Ltd., nonvolatile content: 46%) | 28 parts |
| • polyvinyl alcohol aqueous solution (PVA117, produced by Kuraray | |
| Co., Ltd., nonvolatile content: 16%) | 9 parts |
| • water | 50 parts |

### Example 1

Over a surface on the side where a coated layer was not provided, of a single-sided coated paper (OK ADNIS ROUGH, produced by Oji paper Co., Ltd.) serving as a support and having a basis weight of 80g/m², the thermosensitive adhesive layer coating solution [R solution] containing the resin with Monomer Structure A was applied and dried such that its dry attachment amount was 20g/m², thereby forming a thermosensitive adhesive layer, and a thermosensitive adhesive material was thus produced.

### Example 2

A thermosensitive adhesive layer was formed in a similar manner to Example 1, except that the resin with Monomer Structure A was changed to the resin with Monomer Structure B; and a thermosensitive adhesive material was thus produced.

### Example 3

A thermosensitive adhesive layer was formed in a similar manner to Example 1, except that the resin with Monomer Structure A was changed to the resin with Monomer Structure C; and a thermosensitive adhesive material was thus produced.

### Comparative Example A

A thermosensitive adhesive layer was formed in a similar manner to Example 1, except that the resin with Monomer Structure A was changed to the resin with Monomer Structure D; and a thermosensitive adhesive material was thus produced.

### Example 4

A thermosensitive adhesive layer was formed in a similar manner to Example 1, except that the resin with Monomer Structure A was changed to the resin with Monomer Structure E; and a thermosensitive adhesive material was thus produced.

### Example 5

Over a surface on the side where a coated layer was not provided, of the same support as the one in Example 1, the intermediate layer coating solution [S solution] was applied and dried such that its dry attachment amount was 5g/m², thereby forming an intermediate layer. Subsequently, over the intermediate layer, the thermosensitive adhesive layer coating solution [R solution] containing the resin with Monomer Structure A was applied and dried such that its dry attachment amount was 15g/m², thereby forming a thermosensitive adhesive layer, and a thermosensitive adhesive material was thus produced.

### Example 6

Over a surface on the side where a coated layer was not provided, of a same support as the one in Example 1, E-1054K (nonvolatile content: 50%) produced by Soken Chemical & Engineering Co., Ltd. was applied and dried such that its dry attachment amount was 15g/m², thereby forming an adhesive under layer. Subsequently, over the adhesive under layer, the intermediate layer coating solution [S solution] was applied and dried such that its dry attachment amount was 5g/m², thereby forming an intermediate layer; further, the thermosensitive adhesive layer coating solution [R solution] containing the resin with Monomer Structure A was applied and dried such that its dry attachment amount was 15g/m², thereby forming a thermosensitive adhesive layer, and a thermosensitive adhesive material was thus produced.

### Comparative Example 1

A thermosensitive adhesive layer was formed in a similar manner to Example 1, except that the resin with Monomer Structure A was changed to the resin with Monomer Structure F; and a thermosensitive adhesive material was thus produced.

### Comparative Example 2

A thermosensitive adhesive layer was formed in a similar manner to Example 1, except that the resin with Monomer Structure A was changed to the resin with Monomer Structure G; and a thermosensitive adhesive material was thus produced.

### Comparative Example 3

A thermosensitive adhesive layer was formed in a similar manner to Example 1, except that the resin with Monomer Structure A was changed to the resin with Monomer Structure H; and a thermosensitive adhesive material was thus produced.

### Comparative Example 4

A thermosensitive adhesive layer was formed in a similar manner to Example 1, except that the resin with Monomer Structure A was changed to the resin with Monomer Structure I; and a thermosensitive adhesive material was thus produced.

### Comparative Example 5

A thermosensitive adhesive layer was formed in a similar manner to Example 1, except that the resin with Monomer Structure A was changed to the resin with Monomer Structure J; and a thermosensitive adhesive material was thus produced.

### Comparative Example 6

A thermosensitive adhesive layer was formed in a similar manner to Example 1, except that the resin with Monomer Structure A was changed to the resin with Monomer Structure K; and a thermosensitive adhesive material was thus produced.

### Comparative Example 7

### - Preparation of Thermosensitive Adhesive Layer Coating Solution [R' Solution] -

The following composition was sufficiently agitated, and a thermosensitive adhesive layer coating solution [R' solution] was thus obtained.

| | |
|---|---|
| • copolymer emulsion (Monomer Structure L) | 3 parts |
| • copolymer emulsion (Monomer Structure M) | 7 parts |
| • special rosin ester emulsion (SUPER ESTER E-650, produced by Arakawa Chemical Industries, Ltd.) | 2 parts |
| • water | 15 parts |

A thermosensitive adhesive layer was formed in a similar manner to Example 1, except that the thermosensitive adhesive layer coating solution [R solution] was changed to the thermosensitive adhesive layer coating solution [R' solution]; and a thermosensitive adhesive material was thus produced.

### Comparative Example 8

A thermosensitive adhesive layer was formed in a similar manner to Example 1, except that the resin with Monomer Structure A was changed to the resin with Monomer Structure N; and a thermosensitive adhesive material was thus produced.

### Comparative Example 9

A thermosensitive adhesive layer was formed in a similar manner to Example 1, except that the resin with Monomer Structure A was changed to the resin with Monomer Structure O; and a thermosensitive adhesive material was thus produced.

To each of the thermosensitive adhesive materials according to Examples 1 to 6, Comparative Example A and Comparative Examples 1 to 9, a thermosensitive recording layer was laid over a surface of the support on the side where the thermosensitive adhesive layer was not provided, in accordance with the following procedure.

### <Example of Formation of Thermosensitive Recording Layer> - [Under Layer Forming Solution] -

An [under layer forming solution] was prepared by agitating and dispersing a mixture having the following composition.

| | |
|---|---|
| • fine hollow particle dispersion (copolymer resin based upon vinylidene chloride and acrylonitrile, solid content concentration: 32%, volume average particle diameter: 3.0µm, hollowness: 92%) | 30 parts |
| • styrene-butadiene copolymer latex (Tg: +4°C) | 10 parts |
| • water | 60 parts |

### - [Thermosensitive Color-developing Layer Forming Solution] -

A material mixture for a [leuco dye dispersion solution] having the following composition and a material mixture for a [color developer dispersion solution] having the following composition were each dispersed so as to have a volume average particle diameter of approximately 1.5µm, using a sand mill, and the [leuco dye dispersion solution] and the [color developer dispersion solution] were thus prepared. Subsequently, they were mixed and agitated such that the ratio of the [leuco dye dispersion solution] to the [color developer dispersion solution] was 1:8, and a [thermosensitive color-developing layer forming solution] was thus obtained.

**[Leuco Dye Dispersion Solution]**

| | |
|---|---|
| • 3-di-n-butylamino-6-methyl-7-anilinofluoran | 20 parts |
| • polyvinyl alcohol (10% aqueous solution) | 10 parts |
| • water Color Developer Dispersion Solution] | 70 parts |
| • 4-isopropoxy-4'-hydroxydiphenylsulfone | 10 parts |
| • polyvinyl alcohol (10% aqueous solution) | 25 parts |
| • calcium Carbonate | 15 parts |
| • water | 50 parts |

### - [Protective Layer Forming Solution] -

A material mixture having the following composition was pulverized and dispersed so as to have a volume average particle diameter of 1µm or less, using a vertical sand mill, and a [protective layer primary dispersion solution] was thus prepared; afterward, a [protective layer forming solution] having the following composition was prepared using the [protective layer primary dispersion solution].

### [Protective Layer Primary Dispersion Solution]

| | |
|---|---|
| • aluminum hydroxide | 20 parts |
| • polyvinyl alcohol (10% aqueous solution) | 20 parts |
| • water | 40 parts |

### [Protective Layer Forming Solution]

| | |
|---|---|
| • protective layer primary dispersion solution | 10 parts |
| • polyvinyl alcohol (10% aqueous solution) | 20 parts |
| • 12.5% epichlorhydrin aqueous solution | 5 parts |
| • 30% zinc stearate dispersion solution | 2 parts |

Over the surface of the support, the [under layer forming solution] was applied and dried such that its post-drying weight was 4g/m², and a heat-insulating layer was thus provided. Subsequently, over the heat-insulating layer, the [thermosensitive color-developing layer forming solution] was applied and dried such that its post-drying weight was 5g/m², and a thermosensitive color-developing layer was thus provided.

Afterward, over the thermosensitive color-developing layer, the [protective layer forming solution] was applied and dried such that its post-drying weight was approximately 3g/m², and further, it was supercalendered such that its Oken-type smoothness was 2,000sec. A thermosensitive recording layer was thus provided.

### <Evaluation of Adhesive Property>

Each of the thermosensitive adhesive materials obtained was cut into a 40mm×120mm rectangle and then thermally activated using a thermosensitive printing apparatus (TH-PMD, manufactured by Ohkura Electric Co., Ltd.) under the following conditions: 0.40mJ/dot and 0.50mJ/dot for sources of energy, as head condition; 6ms/line as printing speed; and 6kgf/line as platen pressure.

Subsequently, each activated sample was swiftly affixed to a piece of corrugated fiberboard (C5 Liner A) previously set under certain environmental conditions (the sample was stuck thereto with pressure, as a rubber roller with pressurization of 2kg moved back and forth twice on the sample at a rate of 20mm/s, in accordance with the measuring process described in JIS Z 0237, which involves detaching a sample at an angle of 180° so as to test its adhesion).

After affixed, each sample was left to stand in the same environment for 24hr; subsequently, it was detached at a detachment angle of 180° and a detachment rate of 300mm/min. The adhesion thereof at that time was measured using a force gauge (DPS-5, manufactured by Imada Co., Ltd.), and data was read at intervals of O.lsec. In Table 4, averaged values concerning the data are shown, and those values are based upon N/40mm. Adhesion was ranked as follows.
A: 10N/40mm or greater
B: 5N/40mm or greater, and less than 10N/40mm
C: 2N/40mm or greater, and less than 5N/40mm
D: Less than 2N/40mm

### <Evaluation of Blocking Resistance>

Each kind of thermosensitive adhesive material obtained was evaluated for blocking resistance in the following manner: a thermosensitive adhesive layer surface and a protective layer surface of a thermosensitive recording layer, placed so as to face the thermosensitive adhesive layer surface, were brought into contact with each other, then a pressure of 200gf/cm² was applied, and the thermosensitive adhesive materials were left to stand at 60°C under dry conditions for 15hr. Subsequently, after they were left to stand at room temperature, a sample (one of the thermosensitive adhesive materials) was detached, and the blocking resistance thereof at that time was evaluated according to the criteria shown in Table 3 below. Blocking resistance was classified into ten grades, with the grades 10 and 9 corresponding to A, the grades 8 and 7 corresponding to B, the grades 6, 5 and 4 corresponding to C, and the grades 3, 2 and 1 corresponding to D.

Note that the terms "feeling of resistance at the time of detachment", "sound heard upon detachment", "transfer of dot points" and "detachment" in Table 3 represent extents of blocking, where blocking intensifies in this order. Specifically, the term "feeling of resistance at the time of detachment" means that the sample adheres weakly to a thermosensitive adhesive material even when not given adhesiveness, and the term "deadweight" used in relation thereto denotes a state in which two sheets of paper naturally separate from each other when only the upper one of the two is held, in the case where the sample adheres weakly. The term "sound heard upon detachment" means that when the sample is being detached, a sound is heard. The term "transfer of dot points" denotes a state in which the thermosensitive adhesive layer is transferred onto the back surface in the form of dot points. The term "detachment" means that the thermosensitive adhesive layer adheres strongly to the back surface, and thus the thermosensitive adhesive layer detaches, or paper on the back surface detaches (tears).

**Table 3**

| Grade | | Feeling of resistance at the time of detachment | Sound heard upon detachment | Transfer of dot points | Detachment |
|---|---|---|---|---|---|
| 10 | A | Deadweight | | | |
| 9 | | Slightly felt | Not heard | | |
| 8 | B | Felt | Slightly heard | | |
| 7 | | | Heard | | |
| 6 | C | | | Partly found | |
| 5 | | | | 30% to 50% | |
| 4 | | | | 50% to whole surface | |
| 3 | D | | | | Partly found |
| 2 | | | | | 30% to 50% |
| 1 | | | | | 50% to whole surface |

The evaluation results of the thermosensitive adhesive materials are shown all together in Table 4.

**Table 4**

| | Judgment of Adhesion | | | | | | Blocking resistance |
|---|---|---|---|---|---|---|---|
| | Low-temperature environment 0°C | | Normal-temperature environment 23°C | | High-temperature environment 40°C | | |
| Example 1 | 11.3 | A | 7.3 | B | 7.6 | B | B |
| Example 2 | 10.8 | A | 12.2 | A | 8.9 | B | B |
| Example 3 | 7.4 | B | 10.6 | A | 13.7 | A | A |
| Comparative Example A | 5.3 | B | 6.6 | B | 8.4 | B | B |
| Example 4 | 16.6 | A | 10.5 | A | 5.3 | B | B |
| Example 5 | 12.4 | A | 14.7 | A | 9.5 | B | A |
| Example 6 | 15.7 | A | 20.5 | A | 11.4 | A | B |
| Comparative Example 1 | 12.7 | A | 9.2 | B | 2.4 | C | B |
| Comparative Example 2 | 1.5 | D | 6.8 | B | 10.5 | A | A |
| Comparative Example 3 | 17.6 | A | 4.2 | C | 3.8 | C | A |
| Comparative Example 4 | 11.3 | A | 7.8 | B | 2.9 | C | A |
| Comparative Example 5 | 23.3 | A | 3.6 | C | 1.2 | D | D |
| Comparative Example 6 | 1.1 | D | 8.4 | B | 2.7 | C | A |
| Comparative Example 7 | 0.0 | D | 0.1 | D | 0.1 | D | A |
| Comparative Example 8 | 0.2 | D | 2.7 | C | 4.1 | C | A |
| Comparative Example 9 | 1.8 | D | 4.1 | C | 5.9 | B | A |

## Claims

1. A thermosensitive adhesive material comprising:
a support, and
a thermosensitive adhesive layer provided on one surface of the support, the thermosensitive adhesive layer containing as essential components a thermoplastic resin and a hot-melt material that melts when heated,
wherein the thermoplastic resin contains as a main component a (meth)acrylic copolymer in which acrylonitrile as a monomer component occupies 5% by mass to 20% by mass of all monomer components, and
wherein the glass transition temperature of the copolymer is in the range of-70°C to-30°C,
wherein the (meth)acrylic copolymer contains as a main component [A] 2-ethylhexyl acrylate and a component [B] which can polymerize with [A] to form a copolymer, wherein the mass ratio of [A] to [B] is in the range of 98/2 to 70/30.

2. The thermosensitive adhesive material according to claim 1, further comprising an intermediate layer which contains fine hollow particles and a
thermoplastic resin as main components, between the thermosensitive adhesive layer and the support.

3. The thermosensitive adhesive material according to claim 2, further comprising an adhesive under layer between the support and the intermediate layer.

4. The thermosensitive adhesive material according to any one of claims 1 to 3, further comprising one of a recording layer and a combination of a recording layer and a protective layer, laid over a surface of the support, which is opposite to a surface on which the thermosensitive adhesive layer is provided.

5. The thermosensitive adhesive material according to claim 4, wherein the recording layer is any one of a thermosensitive recording layer, an ink receiving layer for hot-melt transfer recording, an electrophotographic toner image receiving layer, a recording layer for silver halide photography, and an ink-jet ink image receiving layer.

6. The thermosensitive adhesive material according to any one of claims 4 and 5, wherein the support is one of synthetic paper and plastic film.

7. The thermosensitive adhesive material according to any one of claims 4 to 6, being in a form of any one of a label, a sheet, a label sheet and a roll

## Patentansprüche

1. Wärmeempfindliches Klebmaterial umfassend:
einen Träger, und
eine wärmeempfindliche, auf einer Oberfläche des Trägers bereitgestellte Klebschicht, wobei die wärmeempfindliche Klebschicht als wesentliche Bestandteile ein thermoplastisches Harz und ein Schmelzklebermaterial enthält, das schmilzt, wenn es erwärmt wird,
wobei das thermoplastische Harz als einen Hauptbestandteil ein (Meth)acrylcopolymer enthält, in welchem Acrylnitril als eine Monomerkomponente 5 Massen-% bis 20 Massen-% aller Monomerkomponenten einnimmt, und
wobei die Glasübergangstemperatur des Copolymers in dem Bereich von -70°C bis -30°C liegt,
wobei das (Meth)acrylcopolymer als eine Hauptkomponente [A] 2-Ethylhexylacrylat und eine Komponente [B] enthält, welche mit [A] polymerisieren kann, um ein Copolymer zu bilden, wobei das Massenverhältnis von [A] zu [B] in dem Bereich von 98/2 bis 70/30 liegt.

2. Wärmeempfindliches Klebmaterial gemäß Anspruch 1, ferner umfassend zwischen der wärmeempfindlichen Klebschicht und dem Träger eine Zwischenschicht, welche feine Hohlteilchen und ein thermoplastisches Harz als Hauptbestandteile enthält.

3. Wärmeempfindliches Klebmaterial gemäß Anspruch 2, ferner umfassend eine klebende Grundschicht zwischen dem Träger und der Zwischenschicht.

4. Wärmeempfindliches Klebmaterial gemäß irgendeinem der Ansprüche 1 bis 3, ferner umfassend entweder eine Aufzeichnungsschicht oder eine Kombination aus einer Aufzeichnungsschicht und einer Schutzschicht, die über eine Oberfläche des Trägers gelegt ist, welche entgegengesetzt zu der Oberfläche ist, auf welcher die wärmeempfindliche Klebschicht bereitgestellt ist.

5. Wärmeempfindliches Klebmaterial gemäß Anspruch 4, wobei die Aufzeichnungsschicht irgendeine aus einer wärmeempfindlichen Aufzeichnungsschicht, einen Tintenempfangsschicht für Schmelzkleb-Übertragungsaufzeichnung, einer elektrophotographischen Tonerbild-Empfangsschicht, einer Aufzeichnungsschicht für Silberhalogenid-Photographie und einer Tintenstrahl-Tintenbildempfangsschicht ist.

6. Wärmeempfindliches Klebmaterial gemäß irgendeinem der Ansprüche 4 und 5, wobei der Träger entweder synthetisches Papier oder ein Kunststoff-Film ist.

7. Wärmeempfindliches Klebmaterial gemäß irgendeinem der Ansprüche 4 bis 6, das in der Form von irgendeinem aus einem Etikett, einer Folie, einer Etikettenfolie und einer Rolle ist.

## Revendications

1. Matériau adhésif thermosensible comprenant :
un support, et
une couche adhésive thermosensible disposée sur une surface du support, la couche adhésive thermosensible contenant comme composants essentiels une résine thermoplastique et un matériau thermofusible qui fond quand il est chauffé,
où la résine thermoplastique contient comme composant principal un copolymère (méth)acrylique dans lequel l'acrylonitrile comme composant monomère représente 5 % en masse à 20 % en masse de tous les composants monomères, et
où la température de transition vitreuse du copolymère est dans la plage de -70°C à -30°C,
où le copolymère (méth)acrylique contient comme composant principal [A] de l'acrylate de 2-éthylhexyle et un composant [B] qui peut se polymériser avec [A] pour former un copolymère, où le rapport en masse de [A] à [B] est dans la plage de 98/2 à 70/30.

2. Matériau adhésif thermosensible selon la revendication 1, comprenant en outre une couche intermédiaire qui contient de fines particules creuses et une résine thermoplastique comme composants principaux, entre la couche adhésive thermosensible et le support.

3. Matériau adhésif thermosensible selon la revendication 2, comprenant en outre une sous-couche adhésive entre le support et la couche intermédiaire.

4. Matériau adhésif thermosensible selon l'une quelconque des revendications 1 à 3, comprenant en outre l'une d'une couche d'enregistrement et d'une combinaison d'une couche d'enregistrement et d'une couche protectrice, appliquée au-dessus d'une surface du support qui est opposée à une surface sur laquelle la couche adhésive thermosensible est disposée.

5. Matériau adhésif thermosensible selon la revendication 4, où la couche d'enregistrement est l'une quelconque d'une couche d'enregistrement thermosensible, d'une couche de réception d'encre pour enregistrement par transfert thermofusible, d'une couche de réception
d'images de toner électrophotographique, d'une couche d'enregistrement pour photographie à l'halogénure d'argent et d'une couche de réception d'image d'encre pour jet d'encre.

6. Matériau adhésif thermosensible selon l'une quelconque des revendications 4 et 5, où le support est l'un d'un papier synthétique et d'un film plastique.

7. Matériau adhésif thermosensible selon l'une quelconque des revendications 4 à 6, qui est sous forme de l'un quelconque d'une étiquette, d'une feuille, d'une feuille à étiquette et d'un rouleau.
